(19) Europäisches Patentamt
European Patent Office
Office européen des brevets

(11) **EP 0 926 428 B1**

(12) **EUROPÄISCHE PATENTSCHRIFT**

(45) Veröffentlichungstag und Bekanntmachung des Hinweises auf die Patenterteilung:
**21.11.2007 Patentblatt 2007/47**

(51) Int Cl.:
**F17D 1/04** (2006.01)

(21) Anmeldenummer: **98890362.1**

(22) Anmeldetag: **07.12.1998**

(54) **Verfahren und Anordnung zur Entfernung von Brenngasen aus Gasnetzen**

Method and apparatus for removal of fuel gases from a gas distribution network

Méthode et dispositif pour l'élimination de gaz combustible d'un réseau de distribution du gaz

(84) Benannte Vertragsstaaten:
**AT BE DE ES FR GB IT NL SE**

(30) Priorität: **19.12.1997 AT 215897**

(43) Veröffentlichungstag der Anmeldung:
**30.06.1999 Patentblatt 1999/26**

(73) Patentinhaber: **WIEN ENERGIE Gasnetz GmbH
1080 Wien (AT)**

(72) Erfinder: **Franek, Johann Dipl.Ing.Dr.
1100 Wien (AT)**

(74) Vertreter: **Wildhack, Helmut
Patentanwälte
Dipl.-Ing. Dr. Helmut Wildhack,
Dipl.-Ing. Dr. Gerhard Jellinek,
Landstrasser Hauptstrasse 50
1030 Wien (AT)**

(56) Entgegenhaltungen:
**EP-A- 0 419 231          DE-C- 844 134
FR-A- 2 368 666          US-A- 4 346 726**

EP 0 926 428 B1

**EP 0 926 428 B1**

**Beschreibung**

Die Erfindung betrifft ein Verfahren zur Entfernung von insbesondere unter Druck stehenden, insbesondere methanhältigen Brenngasen oder Brenngasgemischen, z.B. Erdgas, Stadtgas, $H_2$- bzw. propan- bzw. butanhältigen Brenngasen oder Erdgasaustauschgasen, aus Netzabschnitten von brenngas- oder brenngasgemischgefüllten Lager- und/oder Leitungseinheiten, z.B. Rohrleitungen oder Speicherbehältern eines Gasnetzes, insbesondere für Reparatur- und/oder Instandhaltungszwecke sowie eine Anordnung zur Durchführung des Verfahrens.

Die meisten Reparatur- oder Inspektionsarbeiten an gasgefüllten Rohrleitungen oder Behältern bzw. von Lager- und/oder Leitungseinheiten eines Gasnetzes können erst nach Entfernen des Brenngases, z.B. Erdgas, aus der betroffenen Leitung oder dem betroffenen Behälter durchgeführt werden. Bei Außerbetriebnahme von Abschnitten des Gasversorgungsnetzes fallen mitunter große Gasmengen an, die üblicherweise in die Atmosphäre abgeblasen werden.

Mechanische Verfahren, bei denen Molche, z.B. Kugeln, durch die Rohrleitungen zur Gasfreimachung gedrückt werden, die den noch vorhandenen Gaspolster vor sich herschieben, können erst ab einer gewissen Rohrdimension und praktisch nur bei Pipelines, welche eine entsprechende Molchschleuse und keine nennenswerten Einbauten und Rohrumlenkungen aufweisen, durchgeführt werden.

Vor allem Wirtschaftlichkeits- und Versorgungsgründe und in letzter Zeit auch Umweltschutzüberlegungen führten zur Entwicklung von Verfahren, die ein teilweises Verwerten der Gasmengen auch in Leitungsnetzen mit relativ geringen Rohrdimensionen ermöglichen sollen.

Es ist bekannt, Netzabschnitte von brenngasgefüllten Lager- und/oder Leitungseinheiten eines Gasnetzes durch Einsatz von sogenannten Stoppel-Geräten gasfrei zu machen; dabei wird durch Aufschweißen passender T-Stücke nach Installation einer By-Pass-Leitung und nach Abstoppeln der Leitung vor und nach der Reparaturstelle der abgetrennte Netzabschnitt, z.B. mit Stickstoff, gefüllt, wobei das ausgespülte Brenngas in die Atmosphäre abgelassen wird. Dieses Verfahren bringt relativ hohe Kosten mit sich und das Abdichten des abgetrennten Netzabschnittes ist aufwendig.

Eine weitere bekannte Vorgangsweise ist, daß man den Gasdruck im abzutrennenden Leitungsabschnitt durch Absperren des Gaszuleitungsbereiches und durchi Anschließen des Gasableitungsbereiches an einen druckschwächeren Leitungsabschnitt absenkt und daraufhin den Netzabschnitt gänzlich vom Gasnetz abtrennt. Die verbleibende Restgasmenge wird aus dem abgetrennten Netzabschnitt in die Atmosphäre abgeblasen.

Weiters ist es bekannt, durch Umpumpen des Gases aus einem abgetrennten Netzabschnitt in das Gasnetz bis zu einem bestimmten Mindestsaugdruck in dem abgetrennten Netzabschnitt den Druck abzusenken. Die verbleibende Restgasmenge wird in die Atmosphäre geblasen.

Zum Stand der Technik zählt ferner das Abfackeln, wobei die aus einem abgetrennten Netzabschnitt herausgedrückten Brenngasmengen verbrannt werden, wobei entsprechende Umweltbedenken zum Tragen kommen bzw. das verbrannte Gas nicht mehr dem Verbraucher zur Verfügung gestellt werden kann.

Ziel der Erfindung ist die Entwicklung eines wirtschaftlichen und einfachen Verfahrens, bei dem ein vom Gasnetz z.B. aufgrund von Reparatur- und/oder Instandhaltungsarbeit abgetrennter Netzabschnitt möglichst umweltfreundlich vom Brenngas befreit werden kann.

Erfindungsgemäß wird dieses Ziel bei einem Verfahren der eingangs genannten Art dadurch erreicht, daß nach einer im Gaszuleitungsbereich des Netzabschnittes erfolgenden, gasdichten oder annähernd gasdichten Abtrennung des Netzabschnittes vom Gasnetz im Abtrennungsbereich ein nicht brennbares und/oder eine die Verbrennung des Brenngases nicht förderndes Spülgas oder Spülgasgemisch, vorzugsweise $N_2$, $N_2$-angereicherte Luft, Rauchgas, $CO_2$, Inertgas oder $H_2O$-Dampf, in den Netzabschnitt eingebracht bzw. eingedrückt wird und daß mit diesem eingedrückten Spülgas oder Spülgasgemisch das in dem Netzabschnitt befindliche Brenngas oder Brenngasgemisch durch den Gasableitungsbereich des Netzabschnittes in das anschließende Gasnetz gefördert bzw. hineingedrückt wird.

Eine sogenannte annähernd gasdichte Abdichtung wird durch Setzen von aufblasbaren Körpern oder das Absperren von Ventilen erreicht. Eine gasdichte Abtrennung erfordert das Setzen einer tatsächlich gasdichten Trennplatte.

Eine Anordnung zur Entfernung von unter Druck stehenden, insbesondere methanhältigen Brenngasen oder Gasgemischen, z.B. Erdgas oder Stadtgas, aus Netzabschnitten von brenngas- oder brenngasgemischgefüllten Lager- und/oder Leitungseinheiten, z.B. Rohrleitungen oder Speicherbehältern, eines Gasnetzes, insbesondere für Reparatur- und/oder Instandhaltungszwecke, wobei Absperreinrichtungen zum annähernd gasdichten Abtrennen des Gaszuleitungsbereiches und des Gasableitungsbereiches des brenngasfrei zu machenden Netzabschnittes und zumindest eine mit dem Gaszuleitungsbereich und zumindest eine mit dem Gasableitungsbereich verbindbare Anschlußeinheit vorgesehen oder installiert sind, ist erfindungsgemäß dadurch gekennzeichnet, daß an die im Gaszuleitungsbereich mit dem Netzabschnitt verbundene Anschlußeinheit eine Einheit zur Einspeisung bzw. zum Eindrücken von Spülgas oder Spülgasgemischen, vorzugsweise $N_2$, $N_2$-angereicherte Luft, Rauchgas, $CO_2$, Inertgas oder $H_2O$-Dampf in den Netzabschnitt angeschlossen ist.

Mit der erfindungsgemäßen Vorgangsweise wird es möglich, den Großteil bzw. nahezu die gesamte Menge der in dem abzutrennenden Netzabschnitt befindlichen Brenngasmenge über vorhandene Leitungen in das intakte Gasnetz zu fördern und zu verbrauchen. Es entfällt somit eine Verbrennung und/oder ein Ausblasen beträchtlicher Restbrenngasmengen in die Atmosphäre, womit beträchtliche Einsparungen von Brenngas erreicht werden. Besondere Vorkehrungen sind nicht zu treffen; es ist lediglich eine Einrichtung vorzusehen, mit der das einzublasende Spülgas bereitgestellt wird.

Bei der erfindungsgemäßen Vorgangsweise kann es von Vorteil sein, wenn zur Verringerung des Druckes im Netzabschnitt nach dem Abtrennen des Gaszuleitungsbereiches des Netzabschnittes vom Gasnetz der Netzabschnitt in seinem Gasableitungsbereich mit einem Bereich des Gasnetzes verbunden wird, in dem ein geringerer Druck als im Netzabschnitt herrscht. Auf diese Weise kann die erforderlich werdende Menge an Spülgas oder Spülgasgemisch reduziert werden bzw. kann die Einspeisung des Spülgases unter geringerem Druck erfolgen.

Die erfindungsgemäße Vorgangsweise sieht vor, daß ohne oder nach einer Druckverringerung in dem Netzabschnitt vor dem Einbringen des Spülgases der Gasableitungsbereich des Netzabschnittes gegenüber dem anschließenden Gasnetz gasdicht oder annähernd gasdicht abgetrennt bzw. abgeschlossen wird, daß daraufhin mit dem eingebrachten Spülgas oder Spülgasgemisch der Druck in dem abgetrennten Netzabschnitt, insbesondere über dem Druck im anschließenden Gasnetz erhöht wird und daß nach Beendigung der Abtrennung im Gasableitungsbereich des Netzabschnittes gegenüber dem anschließenden Gasnetz mit dem Eindrücken des Brenngases oder Brenngasgemisches aus dem abgetrennten Netzabschnitt in das Gasnetz begonnen wird, sobald der Druck in dem abgetrennten Netzabschnitt auf einen vorgegebenen Wert erreicht hat. Diese Vorgangsweise ist zweckmäßig, um eine Vermischung des Spülgases mit dem Brenngas gering zu halten.

Prinzipiell kann mit dem Einleiten des Spülgases begonnen werden, ohne daß der Gasableitungsbereich des Netzabschnittes vom anschließenden Gasnetz abgetrennt wurde. Wesentlich ist die Abtrennung des Gaszuleitungsabschnittes des Netzabschnittes vom Gasnetz.

Um dem Aufwand an Spülgas klein zu halten und ein Eindringen von Spülgas in einem beträchtlichen Ausmaß in das Gasnetz zu vermeiden, ist vorgesehen, daß im Gasableitungsbereich des Netzabschnittes die Konzentration des in das Gasnetz zu drückenden Brenngases oder Brenngasgemisches in bezug auf enthaltenes Spülgas oder Spülgasgemisch gemessen wird und daß bei Erreichen eines vorbestimmten Mischungsverhältnisses, insbesondere bei Erreichen eines Spülgasanteiles eine Abtrennung des Netzabschnittes vom anschließenden Gasnetz erfolgt. Zwischen dem in den Netzabschnitt eingedrückten Spülgas und dem in dem Netzabschnitt befindlichen Brenngas bildet sich eine Mischungszone aus, die im Gasableitungsbereich des Netzabschnittes durch entsprechende Konzentrationsmessungen überwacht wird. Je nach der Kapazität des an den abgetrennten Netzabschnitt anschließenden Gasnetzes, welches das aus dem Netzabschnitt herausgedrückte Brenngas aufnimmt und nach Art der an dieses Gasnetz angeschlossenen Verbraucher kann man mehr oder weniger Spülgas in das Gasnetz einfließen lassen.

Eine vorteilhafte Vorgangsweise, um den bestmöglichen Zeitpunkt der Abtrennung des Netzabschnittes von dem die hinausgedrückten Brenngasmengen aufnehmenden Gasnetz zu erhalten, ist erfindungsgemäß vorgesehen, daß unter Berücksichtigung der strömungstechnischen Gegebenheiten des Netzabschnittes und des Einblasvorganges des Spülgases die Länge und/oder das Volumen einer durch vorgegebene Mischungs- bzw. Konzentrationsverhältnisse begrenzten Mischzone bzw. der zeitliche und/oder örtliche Konzentrationsverlauf der Brenngas-Spülgas-Mischung im Netzabschnitt und/oder der Zeitpunkt des Einlangens der Mischzone bzw. eines bestimmten Konzentrationswertes des Brenngases oder Spülgases im Gasauslaßbereich des Netzabschnittes ermittelt bzw. errechnet wird und daß bei Erreichen eines vorbestimmten Konzentrationswertes oder zum ermittelten Zeitpunkt der Netzabschnitt vom anschließenden Gasnetz abgetrennt wird.

Nach dem Abtrennen des Netzabschnittes im Gasableitungsbereich vom anschließenden Gasnetz nach Erreichen eines vorbestimmten Mischungs- oder Konzentrationsverhältnisses oder eines vorbestimmten Zeitpunktes ein Ausblasen der noch im Netzabschnitt befindlichen Brenngas-Spülgas-Mischung aus dem Gasableitungsbereich in die Atmosphäre und/oder eine Förderung in einen Speicher durch weiteres Einblasen von Spülgas. Die Menge des in die Atmosphäre ausgeblasenen Brenngases ist relativ gering, da sie bereits eine gewisse Verdünnung mit dem Spülgas erfahren hat und es sich lediglich um Restmengen von Brenngas handelt. Prinzipiell ist es auch möglich, das ausgeblasene Brenngas-Spülgasgemisch in einem Speicher aufzufangen und allenfalls eine Trennung und Wiederverwendung des Brenngases vorzunehmen. Spülgas wird so lange in den Netzabschnitt gefördert, bis die Brenngaskonzentration einen vorgegebenen Minimalwert erreicht hat.

Wirtschaftlich wird die erfindungsgemäße Vorgangsweise insbesondere dann, wenn nach Einblasen eines Volumens an Spülgas oder Spülgasgemisch, das dem 1,5- bis 2,5 fachen, vorzugsweise dem 2fachen, Volumen der Mischzonenlänge entspricht, anstelle des Spülgases oder Spülgasgemisches Luft in den Netzabschnitt eingebracht wird. Auf diese Weise wird die Bereitstellung bzw. Herstellung von Spülgas auf ein Minimum reduziert. Gleichzeitig ist jedoch Sorge dafür getragen, daß die in den Netzabschnitt eingeblasene Luft sich mit dem Brenngas nicht vermischen kann und nicht ein explosives Brenngas-Luftgemisch in das Gasnetz eingeleitet wird, da nach Ausdrücken einer etwa einem Mischzonenvolumen entsprechenden Gasmenge der Gasableitungsbereich des Netzabschnittes gegenüber dem Gasnetz abgetrennt wird.

Nach Ausblasen einer weiteren Gasmenge, die einem Volumen einer Mischzone entspricht, in die Atmopshäre oder in einen Speicher, ist die Gefahr der Ausbildung eines explosiven Gemisches bei Verwendung von Luft als weiteres Spülgas aufgrund der nur mehr sehr kleinen Konzentration an Brenngas im Netzabschnitt nicht mehr vorhanden.

Vorteilhaft ist es, wenn zur Verringerung der Länge bzw. des Volumens der Mischzone das Spülgas oder Spülgasgemisch unter Ausbildung einer turbulenten Strömung eingespeist wird. Es zeigte sich dabei, daß bei dieser Vorgangsweise relativ kurze Mischzonen erzielt werden, d.h. das Spülgas schiebt das Brenngas vor sich her, ohne allzu große Vermischungstendenzen.

Ein einfacher Aufbau der erfindungsgemäßen Anordnung ergibt sich, wenn die im Gasableitungsbereichdes Netzabschnittes befindliche Absperreinrichtung nach ihrer Installation für eine zeitweise Freigabe und ein folgendes Absperren des Gasableitungsbereiches des Netzabschnittes gegenüber dem anschließenden Gasnetz vorgesehen ist.

Bei einer erfindungsgemäßen Anordnung ist es vorteilhaft, wenn als Einheit zur Einspeisung von Spülgas, ein Spülgasspeicher und/oder ein Spülgaserzeugungsgerät, oder ein Inertgaserzeugungsgerät mit einer Membrantrennanlage zur Herstellung von $N_2$-angereicherter Luft, vorgesehen ist.

Eine gut regelbare Anwendung ergibt sich, wenn im Gasableitungsbereich des Netzabschnittes ein Konzentrationsmeßgerät zur Bestimmung der Konzentration des Brenngases und/oder Spülgases bzw. des Brenngas-Spülgas-Verhältnisses und/oder zur Bestimmung des Methangehaltes des aus dem Gasableitungsbereich des Netzabschnittes in das anschließende Gasnetz herausgedrückten Brenngases oder Brenngasgemisches angeordnet ist.

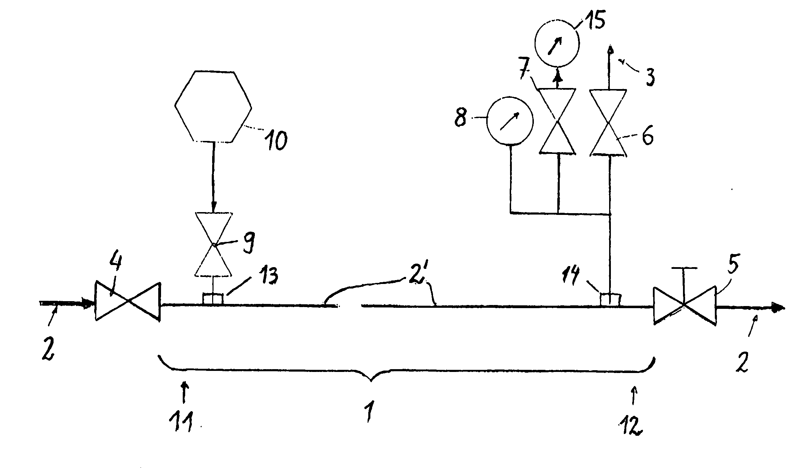

Vorteilhafte Ausführungsformen der Erfindung sind der folgenden Beschreibung, den Patentansprüchen und der Zeichnung zu entnehmen.

In der Figur ist schematisch ein Gasnetz 2 dargestellt, von dem ein Netzabschnitt 1 mit einer erfindungsgemäßen Anordnung weitgehend brenngasfrei gemacht werden soll. Dazu wird anfänglich der Gaszuleitungsbereich 11 des brenngasfrei zu machenden Netzabschnittes 1 mittels einer Absperreinrichtung 4 vom Gasnetz 2 abgetrennt.

Dieser abzutrennende Netzabschnitt 1 ist in Form einer Leitung 2' dargestellt. Dieser Netzabschnitt 1 kann jedoch Leitungen und/oder Behälter umfassen. Von dem Netzabschnitt 1 abgehende oder in diesen einmündende Leitungen werden abgesperrt, sodaß eine durchgehende Strecke für das Brenngas und das zum Herausdrücken des Brenngases verwendete Spülgas gegeben ist, die keine Verzweigungen hat, in denen sich Brenngasreste sammeln können.

Auch für den Gasableitungsbereich 12 des Netzabschnittes 1 ist eine Absperreinrichtung 5 zum Abtrennen des Netzabschnittes 1 gegenüber das an den Netzabschnitt 1 anschließende Gasnetz 2 vorgesehen. Diese Absperreinrichtung 5 kann geöffnet oder geschlossen werden, um die Verbindung zwischen dem Gasableitungsbereich 12 des Netzabschnittes 1 und dem anschließenden Gasnetz 2 trennen oder öffnen zu können.

Die Absperreinrichtungen 4 und 5 können übliche, in den Gasnetzen bereits eingebaute Absperreinrichtungen sein; nötigenfalls können derartige Absperreinrichtungen auch eigens für diesen Zweck gesetzt werden; derartige Absperreinrichtungen sind dem Fachmann bekannt.

Des weiteren werden im Gaszuleitungsbereich 11 des Netzabschnittes 1 und im Gasableitungsbereich 12 des Netzabschnittes 1 Anschlußeinheiten 13, 14 gesetzt. Derartige Anschlußeinrichtungen 13, 14 können auch in den Netzabschnitt 1 bzw. in die Gasleitung 2' einmündende Rohrleitungen sein, über die eine Verbindung zum Netzabschnitt 1 hergestellt werden kann.

An die im Gaszuleitungsbereich 11 angeschlossene Anschlußeinheit 13 ist über eine Absperreinheit 9 eine Einheit 10 zur Erzeugung bzw. zum Eindrücken von Spülgas oder Spülgasgemischen in den Netzabschnitt 1 angeschlossen. An die Anschlußeinheit 14 im Gasableitungsbereich 12 des Netzabschnittes 1 sind ein Manometer 8 und über eine Absperreinrichtung 7 eine Konzentrationsmeßeinrichtung 15 zur Bestimmung der Konzentration des Brenngases und/oder des Spülgases und/oder des Methangehaltes im Brenngas angeschlossen. Über eine Absperreinrichtung 6 und die Anschlußeinheit 14 kann der Netzabschnitt 1 mit der Atmosphäre 3 verbunden werden, um Restbrenngasmengen in die Atmosphäre oder in angeschlossene Speicher auszubringen.

Zur Brenngasfreimachung des Netzabschnittes 1 wird nunmehr erfindungsgemäß wie folgt vorgegangen:

Nach Abtrennen des Netzabschnittes 1 durch die gesetzte oder vorhandene Absperreinrichtung 4 kann mit einer gesetzten oder vorhandenen Absperreinrichtung 5 im Gasableitungsbereich 12 des Netzabschnittes 1 gegebenenfalls der Druck des Brenngases im Netzabschnitt 1 verringert werden, indem der Gasableitungsbereich 12 an das Gasnetz 2 angeschlossen wird, in dem der Druck erniedrigt wird bzw. wurde. Wenn eine derartige Druckerniedrigung durchführbar ist, kann ein beträchtlicher Anteil des im Netzabschnitt 1 befindlichen Brenngases dem Gasnetz 2 zugeführt werden. Daraufhin erfolgt ein Absperren der Absperreinrichtung 5 und ein Abtrennen des Netzabschnittes 1 vom Gasnetz 2 und über die Anschlußeinheit 13 und die Absperreinrichtung 9 wird von der Einheit 10 Spülgas unter Druck in den Netzabschnitt 1 eingedrückt.

Prinzipiell ist es auch möglich, ohne zuvor mit der Absperreinrichtung 5 den Netzabschnitt 1 vom anschließenden Gasnetz 2 abzutrennen, Spülgas mit der Einheit 10 in den Netzabschnitt 1 einzufördern. Erfolgt mit dem eingeförderten Spülgas 10 jedoch zuvor ein Druckaufbau in dem abgetrennten Netzabschnitt 1, so wird die Vermischung zwischen Spülgas und Brenngas beim Herausdrücken des Brenngases reduziert.

Ist ein vorgegebener Druck im Netzabschnitt 1 mit dem Spülgas aufgebaut, so erfolgt ein Öffnen der Absperreinrichtung 5 bei gleichzeitiger weiterer Förderung von Spülgas mit der Einheit 10 in den Netzabschnitt 1, womit das im Netzabschnitt 1 befindliche Brenngas in das an den Netzabschnitt 1 anschließende Gasnetz 2 hinausgedrückt wird.

Dieses Hinausdrücken erfolgt solange, bis mit der Konzentrationsmeßeinrichtung 15 ein bestimmtes Mischungsverhältnis zwischen Spülgas und Brenngas erreicht ist. Alternativ dazu kann die Zeitdauer der Einspeisung des Spülgases überwacht werden und nach einer bestimmten Zeitdauer, die vorab rechnischerisch festgestellt wurde, die Absperreinheit 5 abgeschlossen werden.

In dem Netzabschnitt 1 ist zu diesem Zeitpunkt im Gaszuleitungsbereich 11 nahezu nur mehr reines Spülgas vorhanden, wogegen im Gasableitungsbereich 12 noch eine Brenngas- Spülgas-Mischung vorliegt. Diese Brenngas-Spülgas-Mischung kann bis zu dem Ausmaß in das anschließende Gasnetz 2 gedrückt werden, als das Spülgas für die vom Gasnetz 2 versorgten Verbraucher tolerierbar ist. Der im Netzabschnitt 1 verbleibende Rest an Brenngas-Spülgas-Mischung wird über die Absperreinrichtung 6 entweder in die Atmosphäre 3 oder in einen Speicher übergeführt und allenfalls getrennt.

Das erfindungsgemäße Verfahren eignet sich für beliebige, insbesondere methanhältige, Brenngase oder Brenngasgemische. Als Spülgas bzw. Spülgasgemische kann eine Reihe von Gasen bzw. Gasgemischen eingesetzt werden, insbesondere solche, die entweder selbst nicht brennbar sind oder mit dem vorhandenen Brenngas keine brennbare Verbindung eingehen bzw. die Verbrennung des Brenngases nicht fördern.

Die Einheit 10 zur Einspeisung bzw. zum Eindrücken von Spülgas oder Spülgasgemischen kann z.B. ein Gasspeicher sein, der eine Anzahl von Flaschenbatterien umfaßt, in denen das einzudrückende Spülgas unter Druck gespeichert vorliegt. Eine weitere Möglichkeit ist der Einsatz von mobilen oder stationären Spül- bzw. Inertgaserzeugungsgeräten, wie z.B. Geräten, die unter Verwendung einer Druckwechseladsorption aus der Luft Stickstoff bereitstellen, oder die an Membrananlagen ausgebildet sind.

Der übliche Druck des Brenngases im Gasnetz 2 beträgt bis zu 10 bar. Dieser Druck könnte bei einer Druckverringerung im Gasnetz 2 auf etwa 25 mbar bis 1 bar vermindert werden. Der typische maximale Betriebsdruck von Inertgaserzeugungsgeräten beträgt etwa 15 bar; allenfalls kann der Einheit 10 zur Einspeisung von Spülgas auch ein Kompressor nachgeschaltet sein, um entsprechend höhere Drücke zu erzeugen.

Vorteilhafterweise wird das Spülgas so schnell eingebracht, daß sich eine turbulente Strömung ausbildet, wodurch die sich ausbildende Mischzone zwischen den Brenngas und dem Spülgas so kurz als möglich ausfällt.

Vorteilhafterweise wird eine Absperrung des Netzabschnittes 1 mit der Absperreinrichtung 5 vorgenommen, wenn die Methankonzentration im Gasableitungsbereich 12 unter einen Wert von 90 % Restmethan absinkt. Diese Konzentration hängt von der Leistungsfähigkeit des dem Netzabschnitt 1 folgenden Gasnetzes 2 ab; auf jeden Fall soll die Methankonzentration derart gewählt werden, daß ein Verlöschen bei vom Gasnetz 2 versorgten Haushaltsgeräten vermieden wird.

Eine Vorhersage zur Berechnung der Länge der Mischzone bzw. zur Berechnung der Zeitspanne, nach der im Gasableitungsbereich mit einer Konzentrationsabnahme des im Brenngas enthaltenen Methans unter 90 % zu rechnen ist, kann mittels der folgenden Vorgangsweise erfolgen:

Zunächst wird die Reynolds'sche Zahl

$$\mathrm{Re} = \frac{U d_R \rho}{\eta}$$

berechnet, um festzustellen, ob eine laminare (Re < 2300) oder eine turbulente Strömung (Re > 2300) in dem Rohrleitungssystem 12' des Netzabschnittes 1 herrscht.

Anschließend wird der axiale Dispersionskoeffizient berechnet, wobei vorab festzustellen ist, ob laminare oder turbulente Strömung herrscht:

bei laminarer Strömung gilt

$$\mathrm{D_{ax}} = \frac{d_R^2 U^2}{192 D} + D,$$

und für turbulente Strömung bzw. Übergangsströmung gilt

$$D_{ax} = \frac{\eta}{\rho}\left(\frac{3*10^7}{Re^{1.1}} + 1{,}35\,Re^{0.875}\right).$$

Es wurde durch Versuche festgestellt, daß die örtliche bzw. zeitliche Konzentration $C_m$ des in den Netzabschnitt eingespeisten Spülgases oder Spülgasgemisches bei Ausbildung einer turbulenten Strömung bzw. einer Übergangsströmung nach den Formeln

$$\frac{C_m}{C_o} = \frac{1}{2} + \frac{1}{2}\,erf\left(\frac{1}{2}\,x_1 D_{ax}^{-\frac{1}{2}}\,t^{-\frac{1}{2}}\right) \qquad\qquad x_1 < 0$$

$$\frac{C_m}{C_o} = \frac{1}{2} - \frac{1}{2}\,erf\left(\frac{1}{2}\,x_1 D_{ax}^{-\frac{1}{2}}\,t^{-\frac{1}{2}}\right) \qquad\qquad x_1 > 0$$

berechnet werden kann, wobei

$$D_{ax} = \frac{\eta}{\rho}\left(\frac{3*10^7}{Re^{1.1}} + 1{,}35\,Re^{0.875}\right)$$

und

$$erf\ z = 2\pi^{-\frac{1}{2}}\int_0^z exp\left(-z^2\right)dz$$

und wobei

$x_1$      der Relativ-Koordinate L-U.t entspricht, und wobei
$d_R$      den Rohrdurchmesser,
D        den molekularen Diffusionskoeffizienten des Spülgases in bezug auf das Brenngas,
L        die jeweilige Entfernung vom Einblaspunkt des Spülgases,
U        den Mittelwert der Strömungsgeschwindigkeit des Spülgases,
$D_{ax}$      den axialen Dispersionskoeffizienten des Spülgases,
Re      die Reynolds'sche Zahl des Spülgases,
$\eta$        die dynamische Viskosität des Spülgases,
$\rho$        die Dichte des Spülgases und
$C_o$      die Anfangskonzentration des Spülgases
erf z      das Gauß'sche Fehlerintegral für z

darstellen.
Es zeigte sich, daß mit der erfindungsgemäßen Vorgangsweise sowohl Rohrleitungen mit kleinem und sehr großem Rohrinnendurchmesser effizient von Brenngas befreit werden konnten. In gleicher Weise konnten auch Speicherbehälter für Brenngas mit kugeliger oder zylindrischer Form ohne Ausbildung weitgehend von Brenngas befreit werden.
Die Vorteile der erfindungsgemäßen Vorgangsweise sind, daß die in Rohrleitungen und/oder Behältern enthaltenen Gasmengen zum größten Teil in das Gasnetz weitergeleitet werden können, womit ein beträchtlicher wirtschaftlicher Nutzen erreicht wird. Des weiteren ist die erfindungsgemäße Vorgangsweise unabhängig von unterschiedlichen Rohrleitungsdurchmessern. Des weiteren erfolgt nahezu keine Freisetzung von Brenngas in die Atmosphäre, d.h. eine Freisetzung des Treibhausgases Methan unterbleibt.

Die allenfalls vorzunehmende Freisetzung von Restbrenngasmengen bzw. Brenngas-Spülgas-Mischungen in die Atmosphäre erfordert keine Absperrungen des betroffenen Gebietes im Hinblick auf die Ausbildung eines explosiven Gasgemisches, sodaß der Organisationsaufwand wesentlich verringert werden kann.

Mit üblichen Einheiten 10 zur Erzeugung von Spülgas, insbesondere Inertgaserzeugungsgeräten mit Membrantrennanlage, wird Spülgas mit einem Stickstoffanteil von 95 % und einem Anteil von 5 % Sauerstoff erzeugt. Es kann vorgesehen sein, daß nach dem Einblasen von mit der Einheit 10 hergestelltem Spülgas im Ausmaß eines Volumens, das zumindest dem Volumen einer Mischzonenlänge, vorzugsweise dem doppelten Volumen einer Mischzonenlänge, entspricht, mit dem Einblasen von Außenluft begonnen wird, da die Gefahr einer Vermischung der sauerstoffreichen Außenluft mit dem Brenngas zu einem explosiven Gemisch nicht mehr besteht, weil die Konzentration des Brenngases im Spülgas bereits ausreichend abgenommen hat. Das Einblasen von Außenluft kann mit einem üblichen Kompressor erfolgen.

Beim Wiederbefüllen des Netzabschnittes mit Brenngas kann das Inertspülgas entweder ins Freie oder in entsprechender kleiner Dosierung ins anschließende Gasnetz geleitet werden.

**Patentansprüche**

1. Verfahren zur Entfernung von insbesondere unter Druck stehenden, insbesondere methanhältigen Brenngasen oder Brenngasgemischen, z.B. Erdgas, Stadtgas, $H_2$- bzw. propan- bzw. butanhältigen Brenngasen oder Erdgasaustauschgasen aus Netzabschnitten von brenngas- oder brenngasgemischgefüllten Lager- und/oder Leitungseinheiten, z.B. Rohrleitungen, Speicherbehältern eines Gasnetzes, insbesondere für Reparatur- und/oder Instandhaltungszwecke, **dadurch gekennzeichnet, daß** nach einer im Gaszuleitungsbereich des Netzabschnittes erfolgenden, gasdichten oder annähernd gasdichten Abtrennung des Netzabschnittes vom Gasnetz im Abtrennungsbereich ein nicht brennbares und/oder eine Verbrennung des Brenngases nicht förderndes Spülgas oder Spülgasgemisch, vorzugsweise $N_2$, $N_2$-angereicherte Luft, Rauchgas, $CO_2$, Inertgas oder $H_2O$-Dampf in den Netzabschnitt eingebracht bzw. eingedrückt wird und daß mit diesem eingedrückten Spülgas oder Spülgasgemisch das in dem Netzabschnitt befindliche Brenngas oder Brenngasgemisch durch den Gasableitungsbereich des Netzabschnittes in das anschließende Gasnetz gefördert bzw. hineingedrückt wird.

2. Verfahren nach Anspruch 1, **dadurch gekennzeichnet, daß** zur Verringerung des Druckes im Netzabschnitt, nach dem Abtrennen des Netzabschnittes in seinem Gaszuleitungsbereich vom Gasnetz, der Netzabschnitt in seinem Gasableitungsbereich mit einem Bereich des Gasnetzes verbunden wird, in dem ein geringerer Druck als im Netzabschnitt herrscht oder in dem ein geringerer Druck eingestellt wird.

3. Verfahren nach Anspruch 1 oder 2, **dadurch gekennzeichnet, daß** in dem Netzabschnitt, ohne oder nach einer Druckverringerung, vor dem Einbringen des Spülgases oder Spülgasgemisches der Gasableitungsbereich des Netzabschnittes gegenüber dem anschließenden Gasnetz gasdicht oder annähernd gasdicht abgetrennt bzw. abgeschlossen wird,
daß daraufhin mit dem eingebrachten Spülgas oder Spülgasgemisch der Druck in dem abgetrennten Netzabschnitt insbesondere über den Druck im anschließenden Gasnetz erhöht wird, und daß nach Beendigung der Abtrennung im Gasableitungsbereich des Netzabschnittes gegenüber dem anschließenden Gasnetz mit dem Eindrücken des Brenngases oder Brenngasgemisches aus dem abgetrennten Netzabschnitt in das Gasnetz begonnen wird, sobald der Druck in dem abgetrennten Netzabschnitt einen vorgegebenen Wert erreicht hat.

4. Verfahren nach einem der Ansprüche 1 bis 3, **dadurch gekennzeichnet, daß** im Gasableitungsbereich des Netzabschnittes die Konzentration des in das Gasnetz zu drückenden Brenngases oder Brenngasgemisches in bezug auf enthaltenes Spülgas oder Spülgasgemisch gemessen wird und daß bei Erreichen eines vorbestimmten Mischungsverhältnisses, insbesondere bei Erreichen eines Spülgasanteiles von annähernd 10 Vol.%, eine Abtrennung des Netzabschnittes vom anschließenden Gasnetz erfolgt.

5. Verfahren nach einem der Ansprüche 1 bis 4, **dadurch gekennzeichnet, daß** unter Berücksichtigung der strömungstechnischen Gegebenheiten des Netzabschnittes und des Einblasvorganges des Spülgases die Länge und/oder das Volumen einer durch vorgegebene Mischungs- bzw. Konzentrationsverhältnisse begrenzten Mischzone bzw. der zeitliche und/oder örtliche Konzentrationsverlauf der Brenngas-Spülgas-Mischung im Netzabschnitt und/oder der Zeitpunkt des Einlangens der Mischzone bzw. eines bestimmten Konzentrationswertes des Brenngases oder Spülgases im Gasauslaßbereich des Netzabschnittes ermittelt bzw. errechnet wird, und daß bei Erreichung eines vorbestimmten Konzentrationswertes oder zum ermittelten Zeitpunkt der Netzabschnitt vom anschließenden Gasnetz abgetrennt wird.

6. Verfahren nach Anspruch 5, **dadurch gekennzeichnet, daß** nach dem Abtrennen des Netzabschnittes im Gasableitungsbereich vom anschließenden Gasnetz nach Erreichen eines vorbestimmten Mischungs- bzw. Konzentrationsverhältnisses oder eines vorbestimmten Zeitpunktes ein Ausblasen der noch im Netzabschnitt befindlichen Brenngas-Spülgas-Mischung aus dem Gasableitungsbereich in die Atmosphäre und/oder in einen Speicher durch weiteres Einblasen von Spülgas erfolgt.

7. Verfahren nach einem der Ansprüche 1 bis 6, **dadurch gekennzeichnet, daß** nach Einblasen eines Volumens an Spülgas oder Spülgasgemisch, das dem 1,5- bis 2,5fachen, vorzugsweise dem 2-fachen, Volumen der Mischzonenlänge entspricht, anstelle des Spülgases oder Spülgasgemisches Luft in den Netzabschnitt eingebracht wird.

8. Verfahren nach einem der Ansprüche 1 bis 7, **dadurch gekennzeichnet, daß** zur Verringerung der Länge bzw. des Volumens der Mischzone das Spülgas oder Spülgasgemisch unter Ausbildung einer turbulenten Strömung eingespeist wird.

9. Verfahren nach einem der Ansprüche 1 bis 8, **dadurch gekennzeichnet, daß** die örtliche bzw. zeitliche Konzentration $C_m$ des in den Netzabschnitt eingespeisten Spülgases oder Spülgasgemisches bei Ausbildung einer turbulenten Strömung bzw. einer Übergangsströmung nach den Formeln

$$\frac{C_m}{C_o} = \frac{1}{2} + \frac{1}{2} erf\left(\frac{1}{2} x_1 D_{ax}^{-\frac{1}{2}} t^{-\frac{1}{2}}\right) \qquad x_1 < 0$$

$$\frac{C_m}{C_o} = \frac{1}{2} - \frac{1}{2} erf\left(\frac{1}{2} x_1 D_{ax}^{-\frac{1}{2}} t^{-\frac{1}{2}}\right) \qquad x_1 > 0$$

berechnet wird, wobei

$$D_{ax} = \frac{\eta}{\rho}\left(\frac{3*10^7}{Re^{1.1}} + 1{,}35 Re^{0.875}\right)$$

und

$$erf\ z = 2\pi^{-\frac{1}{2}} \int_0^z \exp\left(-z^2\right) dz$$

und wobei

$x_1$ der Relativ-Koordinate L-U.t entspricht, und wobei
$d_R$ den Rohrdurchmesser,
D den molekularen Diffusionskoeffizienten des Spülgases in bezug auf das Brenngas,
L die jeweilige Entfernung vom Einblaspunkt des Spülgases,
U den Mittelwert der Strömungsgeschwindigkeit des Spülgases,
$D_{ax}$ den axialen Dispersionskoeffizienten des Spülgases,

Re die Reynotds'sche Zahl des Spülgases,

η die dynamische Viskosität des Spülgases,

ρ die Dichte des Spülgases und

$C_o$ die Anfangskonzentration des Spülgases

erf z das Gauß'sche Fehlerintegral für z

darstellen.

**10.** Anordnung zur Entfernung von unter Druck stehenden, insbesondere methanhältigen, Brenngasen oder Brenngasgemischen, z.B. Erdgas, Stadtgas, aus Netzabschnitten (1) von brenngas- oder brenngasgemischgefüllten Lager- und/oder Leitungseinheiten, z.B. Rohrleitungen, Speicherbehältern, eines Gasnetzes (2), insbesondere für Reparatur- und/oder Instandhaltungszwecke, wobei Absperreinrichtungen (4, 5) zum Abtrennen des Gaszuleitungsbereiches (11) und des Gasableitungsbereiches (12) des brenngasfrei zu machenden Netzabschnittes (1) und zumindest eine mit dem Gaszuleitungsbereich (11) und zumindest eine mit dem Gasableitungsbereich (12) verbindbare Anschlußeinheit (13; 14) vorgesehen oder installiert sind, insbesondere zur Durchführung des Verfahrens nach einem der Ansprüche 1 bis 9, **dadurch gekennzeichnet, daß** an die im Gaszuleitungsbereich (11) mit dem Netzabschnitt (1) verbundene Anschlußeinheit (13) eine Einheit (10) zur Einspeisung bzw. zum Eindrücken von Inert- bzw. Spülgas oder Inert- bzw. Spülgasgemischen, vorzugsweise $N_2$, $N_2$-angereicherte Luft, Rauchgas, $CO_2$, Inertgas oder $H_2O$-Dampf, in den Netzabschnitt (1) angeschlossen ist.

**11.** Anordnung nach Anspruch 10, **dadurch gekennzeichnet, daß** die im Gasableitungsbereich (12) des Netzabschnittes (1) befindliche Absperreinrichtung (5) nach ihrer Installation für eine zeitweise Freigabe und ein folgendes Absperren des Gasableitungsbereiches (12) des Netzabschnittes (1) gegenüber dem anschließenden Gasnetz (2) vorgesehen ist.

**12.** Anordnung nach Anspruch 10 oder 11, **dadurch gekennzeichnet, daß** als Einheit (10) zur Einspeisung von Spülgas, ein Spülgasspeicher und/oder ein Spülgaserzeugungsgerät oder ein Inertgaserzeugungsgerät mit einer Membrantrennanlage zur Herstellung von $N_2$-angereicherter Luft, vorgesehen ist.

**13.** Anordnung nach einem der Ansprüche 10 bis 12, **dadurch gekennzeichnet, daß** im Gasableitungsbereich (12) des Netzabschnittes (1) ein Konzentrationsmeßgerät (15) zur Bestimmung der Konzentration des Brenngases und/oder Spülgases bzw. des Brenngas-Spülgas-Verhältnisses und/oder zur Bestimmung des Methangehaltes des aus dem Gasableitungsbereich (12) des Netzabschnittes (1) in das anschließende Gasnetz (2) herausgedrückten Brenngases oder Brenngasgemisches angeordnet ist.

**Claims**

**1.** Method for removal of, particularly pressurised, fuel gases or fuel gas mixtures, which, in particular, contain methane, e.g. natural gas, sewer gas, fuel gases containing $H_2$ and/or propane and/or butane, or natural gas replacement gases, from network sections of storing and/or conduit units filled with fuel gas or fuel gas mixtures, e.g. pipes, storing vessels of a gas network, particularly for the purpose of repair and/or maintenance, **characterised in that**, after separating the network section in the region of gas supply of said network section in a gas tight or approximately gas tight manner from said gas network, a non-burning and/or burning not promoting scavenging gas or a scavenging gas mixture, preferably $N_2$, $N_2$ enriched air, smoke gas, $CO_2$, an inert gas or $H_2O$ steam, is introduced or pressed into said network section within the region of separation, and that that fuel gas or fuel gas mixture, which is in said network section, is fed or pressed into the subsequent gas network through the gas discharge region of said network section.

**2.** Method according to claim 1, **characterised in that** for reducing pressure within said network section, having separated said network section in its region of gas supply from said gas network, the gas discharge region of said network section is connected to a region of said gas network where a smaller pressure prevails than in said network section or where a smaller pressure is adjusted.

**3.** Method according to claim 1 or 2, **characterised in that** the gas discharge region of said network section is separated or closed in said network section in a gas tight or approximately gas tight manner, either without or after a pressure reduction, before introducing said scavenging gas or said scavenging gas mixture,
that after that the pressure in the separated network section is increased by the introduced scavenging gas or scavenging gas mixture, particularly by the pressure in the joining gas network, and that, after termination of the separation in the gas discharge region of said network section relative to the joining gas network, one begins with pressing fuel gas or a fuel gas mixture from the separated network section into said gas network as soon as the pressure in the separated network section has reached a predetermined value.

4. Method according to any of claims 1 to 3, **characterised in that** one measures in the gas discharge region of said network section the concentration of the fuel gas or fuel gas mixture to be pressed into said gas network with respect to the scavenging gas or the scavenging gas mixture contained therein, and that said network section is separated from the joining gas network when a predetermined mixing proportion is achieved, particularly when a proportion of scavenging gas of approximately 10 % by volume is attained.

5. Method according to any of claims 1 to 4, **characterised in that** one determines or calculates the length and/or the volume of a mixing zone delimited by predetermined mixing or concentration proportions, while considering the inflow technical conditions of said network section and of the blowing in procedure of the scavenging gas, and/or the course of concentration of the mixture of fuel gas and scavenging gas in said network section over time and/or the local one and/or the moment of arrival of the mixing zone or of a certain concentration value of said fuel gas or of said scavenging gas in the gas discharge region of said network section, and that said network section is separated from the joining gas network when a predetermined concentration value is reached or at the determined moment.

6. Method according to claim 5, **characterised in that**, after separating the gas discharge region of said network section from the adjoining gas network, or having reached a predetermined mixing or concentration proportion or a predetermined moment, blowing out the fuel gas/scavenging gas mixture still existing in said network section from said gas discharge region into the atmosphere and/or into a reservoir by further blowing scavenging gas in is effected.

7. Method according to any of claims 1 to 6, **characterised in that** after blowing in a volume of scavenging gas or of a scavenging gas mixture that corresponds to the 1.5-fold to the 2.5-fold, preferably to the 2-fold, volume of the mixing zone's length, air is introduced into said network section instead of a scavenging gas or a scavenging gas mixture.

8. Method according to any of claims 1 to 7, **characterised in that**, for reducing the length or the volume of the mixing zone, said scavenging gas or said scavenging gas mixture is fed in while forming a turbulent stream.

9. Method according to any of claims 1 to 8, **characterised in that** the local concentration or the concentration in time $C_m$ of the scavenging gas or the scavenging gas mixture fed into said network section, when forming a turbulent stream or a transient stream, is calculated according to the formulas

$$\frac{C_m}{C_o} = \frac{1}{2} + \frac{1}{2} erf\left(\frac{1}{2} x_1 D_{ax}^{-\frac{1}{2}} t^{-\frac{1}{2}}\right) \qquad x_1 < 0$$

$$\frac{C_m}{C_o} = \frac{1}{2} - \frac{1}{2} erf\left(\frac{1}{2} x_1 D_{ax}^{-\frac{1}{2}} t^{-\frac{1}{2}}\right) \qquad x_1 > 0$$

where

$$D_{ax} = \frac{\eta}{\rho}\left(\frac{3*10^7}{Re^{1.1}} + 1.35 Re^{0.875}\right)$$

and

$$\mathrm{erf}\ z = 2\pi^{-\frac{1}{2}} \int_0^z \exp\left(-z^2\right) dz$$

and wherein

$x_1$ corresponds to the Relative-Coordinate L-U.t, and wherein

$d_R$ represents the pipe diameter,

D is the molecular diffusion coefficient of the scavenging gas with respect to the fuel gas,

L is the respective distance from the point of inflow of the scavenging gas,

U is the mean value of the flow velocity of the scavenging gas,

$D_{ax}$ is the axial dispersion coefficient of the scavenging gas,

Re is the Reynolds number of the scavenging gas,

$\eta$ is the dynamic viscosity of the scavenging gas,

$\rho$ is the density of the scavenging gas and

$C_0$ is the initial concentration of the scavenging gas, while

erf z is the Gaussian error integral for z.

10. Apparatus for removal of pressurised, particularly methane containing, fuel gases or fuel gas mixtures, e.g. natural gas, sewer gas, from network sections (1) of storing and/or conduit units filled with fuel gas or fuel gas mixtures, e.g. pipes, storing vessels of a gas network (2), particularly for the purpose of repair and/or maintenance, wherein shutting means (4, 5) for separating the gas supply region (11) and the gas discharge region (12) of the network section (1) to be rendered free of fuel gas, and at least one connection unit (13; 14) to be connected with said gas discharge region (12) is provided or installed, particularly for carrying out the method according to any of claims 1 to 9, **characterised in that** a unit (10) for feeding or pressing inert gas or scavenging gas or inert gas mixtures or scavenging gas mixtures into said network section (1), preferably $N_2$, $N_2$ enriched air, smoke gas, $CO_2$, an inert gas or $H_2O$ steam, is connected to the connection unit (13) being in communication with the gas supply region (11) of said network section (1).

11. Apparatus according to claim 10, **characterised in that** the shutting means (5) located in the gas discharge region (12) of said network section (1), after its installation, is provided for temporary unblocking and subsequent locking the gas discharge region (12) of said network section (1) with respect to the adjoining gas network (2).

12. Apparatus according to claim 10 or 11, **characterised in that** a scavenging gas reservoir and/or a scavenging gas generator or an inert gas generator having membrane separating means for producing $N_2$ enriched air is provided as a unit (10) for feeding scavenging gas in.

13. Apparatus according to any of claims 10 to 12, **characterised in that** a concentration measuring instrument (15) for determining the concentration of the fuel gas and/or of the scavenging gas and/or of the proportion of fuel gas to scavenging gas and/or for determining the methane contents of that fuel gas or fuel gas mixture, which has been pressed out of the gas discharge region (12) of said network section (1) into the adjoining gas network (2), is arranged in the gas discharge region (12) of said network section (1).

**Revendications**

1. Méthode pour l'élimination de gaz combustible, en particulier sous pression, particulièrement de gaz combustible ou des mélanges de gaz contenant du méthane, par exemple du gaz naturel, gaz de ville, de gaz combustible contentant du $H_2$ ou du propane et/ou du butane, ou de gaz d'échange du gaz naturel, hors des sections d'un réseau des unités de stock et/ou de conduit remplies d'un gaz combustible ou d'un mélange de gaz combustible, par exemple des conduits de tuyaux, des réservoirs d'un réseau de distribution de gaz, particulièrement pour des buts de réparation et/ou de maintien, **caractérisée en ce, qu'**après une séparation étanche au gaz ou approximativement étanche au gaz de ladite section de réseau du réseau de distribution de gaz, effectuée dans la zone d'alimentation en gaz de ladite section de réseau, on introduit ou presse un gaz de lavage ou un mélange de gaz de lavage, préférablement du $N_2$, de l'air enrichi en $N_2$, du gaz de fumée, du $CO_2$, d'un gaz inerte ou du vapeur de $H_2O$, dans

ladite section de réseau, et que l'on extrait ou presse le gaz combustible ou le mélange de gaz combustible par le gaz injecté de lavage ou par le mélange injecté de gaz de lavage à travers la zone de décharge de gaz de la section de réseau dans le réseau de distribution de gaz raccordé.

2. Méthode selon la revendication 1, **caractérisée en ce, que** pour une réduction de la pression dans ladite section de réseau, ayant séparé la section de réseau dans sa zone d'alimentation en gaz du réseau de distribution de gaz, on relie la zone de décharge de gaz de la section de réseau à une zone du réseau de distribution de gaz, où une pression plus petite prévaut, que dans la section de réseau, ou dans laquelle on ajuste une pression plus petite.

3. Méthode selon la revendication 1 ou 2, **caractérisée en ce, que**, sans ou après une réduction de pression, on sépare ou isole dans ladite section de réseau la zone de décharge de gaz de la section de réseau d'une manière étanche ou approximativement étanche par rapport au réseau de distribution de gaz raccordé, que l'on augmente en suite la pression dans la section de réseau séparée au moyens du gaz de lavage ou du mélange de gaz de lavage, particulièrement par la pression dans le réseau de distribution de gaz raccordé, et que l'on commence à presser le gaz combustible ou le mélange de gaz combustible de la section séparée de réseau dans le réseau de distribution de gaz après avoir terminé la séparation dans la zone de décharge de gaz de la section de réseau par rapport au réseau de distribution de gaz raccordé, dès que la pression dans la section séparée de réseau ait atteint un valeur prédéterminé.

4. Méthode selon une quelconque des revendications 1 à 3, **caractérisée en ce, que** l'on mesure dans la zone de décharge de gaz de la section de réseau la concentration du gaz combustible ou du mélange de gaz combustible à presser dans le réseau de distribution de gaz par rapport au gaz de lavage ou au mélange de gaz de lavage contenu, et qu'une séparation de la section de réseau du réseau de distribution de gaz est effectuée, quand un rapport des ingrédients prédéterminé est atteint, particulièrement quand on atteint une proportion de gaz de lavage d'environ 10 % volumétrique.

5. Méthode selon une quelconque des revendications 1 à 4, **caractérisée en ce, qu'**en considérant les conditions de la technique des fluides de la section de réseau et de la marche de l'injection du gaz de lavage, on détermine ou calcule la longueur et/ou le volume d'une zone de mélange délimitée par des proportions de mélange ou de concentration, ou le cours de concentration temporaire ou local du mélange des gazes de combustion et de lavage dans la section de réseau et/ou le moment d'arrivée de la zone de mélange ou d'un certain valeur de concentration du gaz combustible ou du gaz de lavage à la zone de décharge de gaz de la section de réseau, et que l'on sépare la section de réseau du réseau de distribution de gaz raccordé, quand un valeur de concentration prédéterminé soit atteint ou au moment déterminé.

6. Méthode selon la revendication 5, **caractérisée en ce, qu'**après la séparation de la section de réseau dans la zone de décharge de gaz du réseau de distribution de gaz raccordé et ayant atteint un rapport de mélange ou de concentration prédéterminé ou un moment prédéterminé, on réalise un purge du mélange de gaz combustible et du gaz de lavage, encore présent dans la section de réseau, de la zone de décharge de gaz à l'atmosphère et/ou à un réservoir par une injection ultérieur de gaz de lavage.

7. Méthode selon une quelconque des revendications 1 à 6, **caractérisée en ce, qu'**après avoir injecté un volume de gaz de lavage ou d'une mélange de gaz de lavage, qui correspond à 1,5 fois à 2,5 fois, préférablement à 2 fois le volume de la longueur de la zone de mélange, on introduit de l'air dans la section de réseau au lieu du gaz de lavage ou du mélange de gaz de lavage.

8. Méthode selon une quelconque des revendications 1 à 7, **caractérisée en ce, que**, pour une réduction de la longueur ou du volume de la zone de mélange, le gaz de lavage ou le mélange de gaz de lavage est introduit en formant un courant turbulent.

9. Méthode selon une quelconque des revendications 1 à 8, **caractérisée en ce, que** la concentration locale ou temporel $C_m$ du gaz de lavage ou du mélange de gaz de lavage introduit dans la section de réseau, en formant un courant turbulent ou un courant transitionnel, est calculée selon les formules

$$\frac{C_m}{C_o} = \frac{1}{2} + \frac{1}{2}\,erf\!\left(\frac{1}{2}\,x_1 D_{ax}^{-\frac{1}{2}}\, t^{-\frac{1}{2}}\right) \qquad x_1 < 0$$

$$\frac{C_m}{C_o} = \frac{1}{2} - \frac{1}{2}\,erf\!\left(\frac{1}{2}\,x_1 D_{ax}^{-\frac{1}{2}}\, t^{-\frac{1}{2}}\right) \qquad x_1 > 0$$

dans lesquelles

$$D_{ax} = \frac{\eta}{\rho}\left(\frac{3*10^7}{Re^{1.1}} + 1{,}35\,Re^{0{,}875}\right)$$

et

$$erf\ z = 2\pi^{-\frac{1}{2}} \int_0^z \exp\!\left(-z^2\right) dz$$

et dans lesquelles

$x_1$ correspond à la Coordonnée Relative L-U.t, et dans lesquelles
$d_R$ représente le diamètre de tuyau,
D est le coefficient de diffusion moléculaire du gaz de lavage par rapport au gaz combustible,
L est la distance respective du point d'injection du gaz de lavage,
U est le valeur moyen de la vélocité de courant du gaz de lavage,
$D_{ax}$ est le coefficient axial de dispersion du gaz de lavage,
Re est le nombre de Reynolds du gaz de lavage,
$\eta$ est la viscosité dynamique du gaz de lavage,
$\rho$ est la densité du gaz de lavage, et
$C_o$ est la concentration initiale du gaz de lavage, tandis que
erf z est l'intégral d'erreurs de Gauss for z.

**10.** Dispositif pour l'élimination de gaz combustible ou des mélanges de gaz sous pression, particulièrement contenant du méthane, par exemple du gaz naturel, gaz de ville, des sections d'un réseau (1) des unités de stock et/ou de conduit remplies d'un gaz combustible ou d'un mélange de gaz combustible, par exemple des conduits de tuyaux, des réservoirs d'un réseau de distribution de gaz (2), particulièrement pour des buts de réparation et/ou de maintien, dans lequel des moyens d'obturation (4, 5) pour séparer la zone d'alimentation en gaz (11) et la zone de décharge de gaz (12) de la section de réseau (1) à rendre libre de gaz combustible, ainsi qu'au moins une unité de connexion (13; 14) à relier à la zone d'alimentation de gaz (11) et au moins une unité de connexion (13; 14) à relier à la zone de décharge de gaz (12) sont prévues ou installées, particulièrement pour la mise en oeuvre du procédé selon une quelconque des revendications 1 à 9, **caractérisé en ce, qu'**une unité (10) pour l'alimentation ou pour presser d'un gaz inerte ou gaz de lavage ou des mélanges de gaz inerte ou de lavage, préférablement du $N_2$, de l'air enrichi en $N_2$, du gaz de fumée, du $CO_2$, du gaz inerte ou du vapeur de $H_2O$ dans la section de réseau (1) est raccordée à l'unité de connexion (13) reliée à la section de réseau (1) dans la zone d'alimentation de gaz (11).

**11.** Dispositif selon la revendication 10, **caractérisé en ce, que** le moyen d'obturation (5) situé dans la zone de décharge de gaz (12) de la section de réseau (1), après son installation, est prévu pour un déblocage temporaire et une obturation subséquent de la zone de décharge de gaz (12) de la section de réseau (1) par rapport au réseau de distribution de gaz (2) raccordé.

12. Dispositif selon la revendication 10 ou 11, **caractérisé en ce, qu'**un réservoir de gaz de lavage et/ou un générateur de gaz de lavage ou un générateur de gaz inerte ayant un dispositif de séparation à membrane pour la préparation de l'air enrichi en $N_2$ est prévu comme unité (10) pour l'alimentation en gaz de lavage.

13. Dispositif selon une quelconque des revendications 10 à 12, **caractérisé en ce, qu'**un appareil mesureur de concentration (15) pour déterminer la concentration du gaz combustible et/ou du gaz de lavage ou du rapport de gaz combustible au gaz de lavage et/ou pour déterminer le contenu en méthane du gaz combustible ou du mélange de gaz combustible pressé hors de la zone de décharge de gaz (12) de la section de réseau (1) dans le réseau de distribution de gaz (2) raccordé est disposé dans la zone de décharge de gaz (12) de la section de réseau (1).

EP 0 926 428 B1